# EUROPÄISCHE PATENTSCHRIFT

(11) **EP 2 702 789 B1**
(45) Veröffentlichungstag und Bekanntmachung des Hinweises auf die Patenterteilung: **01.03.2017**
(21) Anmeldenummer: 12712252.1
(22) Anmeldetag: 28.03.2012
(51) Int. Cl.: H04L 1/18, H04W 84/18

(54) **VERFAHREN ZUR ANZEIGE DER FUNKTIONSFÄHIGKEIT DER FAHRZEUG-ZU-UMGEBUNG-KOMMUNIKATION IN ISM-FUNKBÄNDERN**
METHOD TO DISPLAY OPERATIONAL STATUS OF CAR TO ENVIRONMENT COMMUNICATION IN ISM-RADIO BANDS
PROCEDE D'AFFICHAGE DU FONCTIONNEMENT DE LA COMMUNICATION VÉHICULE À ENVIRONMENT DANS LA BANDE RADIO ISM

(30) Priorität: 26.04.2011 DE 102011018572
(43) Veröffentlichungstag der Anmeldung: 05.03.2014
(73) Patentinhaber: Continental Automotive GmbH, 30165 Hannover (DE)
(72) Erfinder: STÄHLIN, Ulrich, 65760 Eschborn (DE)
(86) Internationale Anmeldenummer: PCT/EP2012/055477
(87) Internationale Veröffentlichungsnummer: WO 2012/146454

(56) Entgegenhaltungen:
- EP-A1- 2 288 190
- WO-A1-2006/011109
- US-A1- 2004 073 361

## Beschreibung

Die Erfindung betrifft ein Verfahren und eine entsprechend eingerichtete Kommunikationseinheit insbesondere eines Kraftfahrzeugs zur Feststellung von Kommunikationsproblemen bei der Fahrzeug-zu-Umgebung-Kommunikation in einem ISM-Funkband.

Bei dem ISM-Funkband handelt es sich um ein Funkband, welches lizenzfrei von Geräten im industriellen, wissenschaftlichen und medizinischen Bereich genutzt werden kann, sofern die Vorgaben insbesondere zum Duty-Cycle eingehalten werden. Die Abkürzung ISM steht dabei für "Industrial, Scientific and Medical". Das lizenzfreie ISM-Funkband wird insbesondere auch durch die drahtlose Zugangs- und Fahrberechtigungskommunikation in Kraftfahrzeugen genutzt, die auch "RKE (Remote-Keyless-Entry)" genannt wird. Als RKE-Kommunikationsband stehen in der Europäischen Union Frequenzbänder bei 434 MHz respektive 868 MHz mit Sendeleistungen von 10 dBm beziehungsweise 14 dBm zur Verfügung. Weitere typische Kommunikationsbänder sind das Band um 2.4 GHz und das Band bei 5 GHz, die hauptsächlich für WLAN, Bluetooth, etc. verwendet werden.

Die vorliegende Erfindung kann allgemein bei Funkbändern Anwendung finden, die nicht mit einer Überlastkontrolle mit Stausteuerung (Congestion Control) ausgestattet sind. Dies gilt insbesondere auch für die Kommunikationsprotokolle der lizenzfreien ISM-Funkbänder.

Aus der WO 2009/074655 A1 ist ein Verfahren zur Übertragung von fahrzeugrelevanten Daten eines Fahrzeugs über mobile Kommunikationseinrichtungen bekannt, bei dem zwei verschiedene Kommunikationswege genutzt werden. Ein erster Kommunikationsweg ist eine WLAN-basierte Kommunikation. Der zweite Kommunikationsweg wird durch eine "Zündschlüssel"-Kommunikation gebildet, die in einem lizenzfreien ISM-Band stattfindet.

Allerdings besteht das Problem, dass die Frequenzbänder der lizenzfreien ISM-Kommunikation auch von vielen anderen Kommunikationseinrichtungen genutzt werden. Hierzu zählen in Kraftfahrzeugen beispielsweise ein Reifendruckkontrollsystem (TPMS - Tire Pressure Monitoring System), Babyphones, Funkkopfhörer, Verbrauchserfassungssysteme und dergleichen. Gerade in urbanen Umgebungen kann es also dazu kommen, dass der Funkkanal so stark ausgelastet ist, dass eine ordnungsgemäße Kommunikation nicht mehr möglich ist.

WO 2006/011109 A1 beschreibt ein Verfahren für Ad-hoc-Netzwerke in Fahrzeug zu Fahrzeug Kommunikation wobei Übertragungen auf dem Broadcast-Kanal reduziert werden abhängig von Kanalqualität oder Inhalt oder Art von empfangenen Nachrichten.

Aufgabe der Erfindung ist es daher, festzustellen, ob eine Fahrzeug-zu-Umgebung-Kommunikation auf einem lizenzfreien ISM-Funkband zuverlässig arbeiten kann, wobei das Ergebnis dieser Feststellung zumindest angezeigt werden soll.

Diese Aufgabe wird erfindungsgemäß mit den Merkmalen des Anspruchs 1 gelöst. Bei dem Verfahren der eingangs beschriebenen Art ist vorgesehen, dass die Kanalauslastung des verwendeten ISM-Funkbandes durch einen Vergleich der durch Kommunikationsbotschaften belegten Kanalzeit zu der maximal für Kommunikationsbotschaften zur Verfügung stehenden Kanalzeit ermittelt wird, und dass bei Überschreiten eines Schwellenwertes der belegten Kanalzeit eine Warnmitteilung ausgegeben wird.

Das Überschreiten des Schwellenwertes kann durch einen absoluten Wert der belegten Kanalzeit, vorzugsweise aber relativ zu der maximal für Kommunikationsbotschaften in dem Kommunikationsprotokoll zur Verfügung stehenden Kanalzeit, bestimmt werden. Das Ermitteln der belegten Kanalzeit kann einfach dadurch erfolgen, dass die Empfangseinrichtung der Kommunikationseinheit zur Fahrzeug-zu-Umgebung-Kommunikation die (alle) in dem ISM-Funkband ausgesandten Kommunikationsbotschaften empfängt und die durch diese Kommunikationsbotschaften belegte Zeit misst. Diese durch Kommunikationsbotschaften belegte Kanalzeit kann bei einer relativen Ermittlung des Überschreitens des Schwellenwertes in Relation zu der in dem Kommunikationsprotokoll vorgegebenen, maximal zur Verfügung stehenden Sendezeit gesetzt werden.

Gemäß einer bevorzugten Ausführungsform ist es möglich, eine erste Warnmitteilung bei Überschreiten eines ersten Schwellenwertes und eine zweite Warnmitteilung bei Überschreiten eines zweiten Schwellenwertes auszugeben. Sinnvolle Schwellenwerte liegen für die erste Warnmitteilung beispielsweise etwa in der Größenordnung von 30 % Kanalauslastung und für die zweite Warnmitteilung bei etwa 50 % Kanalauslastung. 30 % Kanalauslastung bedeutet bereits, dass zeitkritische Kommunikationsbotschaften unter Umständen derart verzögert werden, dass diese Botschaften für auf zeitkritische Informationen angewiesene Funktionseinheiten unter Umständen nicht mehr ganz zuverlässig arbeiten. Allerdings ist damit zu rechnen, dass diese Kommunikationsbotschaften die Funktionseinheiten noch innerhalb üblicher Reaktionszeiten erreichen. Bei Überschreiten eines Schwellenwertes von etwa 50 % Kanalauslastung ist dagegen mit deutlichen Verzögerungen zu rechnen.

Gemäß einer Weiterentwicklung des erfindungsgemäßen Verfahrens kann zusätzlich die Anzahl der defekten und/oder nicht verwertbaren Kommunikationsbotschaften der Fahrzeug-zu-Umgebung-Kommunikation in dem ISM-Funkband über einen gegebenenfalls einstellbar vorgegebenen Zeitraum ermittelt werden, wobei bei Überschreiten eines Schwellenwertes eine Warnmitteilung ausgegeben wird. Im Gegensatz zu der Überwachung der zeitlichen Auslastung des Übertragungskanals durch Ermittlung der durch die Kommunikationsbotschaften belegten Kanalzeit im Vergleich zu der maximal für Kommunikationsbotschaften zur Verfügung stehenden Kanalzeit wird durch die Überwachung der defekten und/oder nicht verwertbaren Kommunikationsbotschaften nicht nur eine Prognose möglicher Störungen gegeben, sondern es werden tatsächliche Störungen in der Kommunikation auf dem ISM-Funkband erfasst. Auch diese sollten mitgeteilt werden, um die aktuelle Zuverlässigkeit der Fahrzeug-zuUmgebung-Kommunikation einschätzen zu können.

Ähnliches gilt für eine weitere Möglichkeit zur Überprüfung der Zuverlässigkeit der Fahrzeug-zu-Umgebung-Kommunikation auf einem lizenzfreien ISM-Funkband, bei der die Latenz für die Übertragung einer Kommunikationsbotschaft der Fahrzeugzu-Umgebung-Kommunikation in dem ISM-Funkband ermittelt und bei Überschreiten eines Schwellenwertes eine Warnmitteilung ausgegeben wird. Unter Latenz wird die Ausbreitungsverzögerung einer Kommunikationsbotschaft zwischen dem Aussenden und dem Empfangen verstanden. Die minimale Latenz ist gegeben durch die physikalische Laufzeit in dem Funkkanal. Bei hoher Auslastung des Funkkanals entstehen jedoch größere Latenzen, die bei Erreichen von Schwellenwerten eine den Zweck der Übertragung nicht mehr angemessene Übertragungsgeschwindigkeit anzeigen können.

Gegebenenfalls können sowohl bei der Ermittlung der Latenz als auch bei der Ermittlung der Anzahl der defekten und/oder nicht verwertbaren Kommunikationsbotschaften auch ein erster und zweiter Schwellenwert verwendet werden, je nachdem, wie stark die Auswirkungen auf die Funkkommunikation in dem ISM-Funkkanal sind.

Um im Falle einer hohen Auslastung einer weiteren Belastung des ISM-Funkkanals entgegenzuwirken, kann erfindungsgemäß vorgesehen sein, dass bei Erreichen eines Schwellenwertes die Wiederholrate der Datenaussendung reduziert wird. Hierfür kann ein eigener Schwellenwert festgelegt werden. Vorzugsweise wird jedoch derselbe Schwellenwert wie bei den vorstehenden Überprüfungen für das Erzeugen der Warnmitteilung verwendet. Gegebenenfalls kann die Wiederholrate bei Erreichen eines ersten Schwellenwertes weniger stark reduziert werden als bei Erreichen eines zweiten Schwellenwertes.

Bei einer üblichen Wiederholrate von etwa 1 Hz kann die Wiederholrate bei Erreichen eines Schwellenwertes beispielsweise stufenweise auf 0,5 Hz oder 0,33 Hz abgesenkt werden. Dies erfolgt vorzugsweise in einer Kommunikationseinheit, welche sowohl einen Empfänger als auch einen Sender aufweist. Der Empfänger dieser Kommunikationseinheit wertet den Funkkanal aus und steuert das Aussenden der Kommunikationsbotschaften mittels des zugeordneten Senders. Gegebenenfalls kann auch eine eigene Kommunikationsbotschaft zur temporären Verminderung der Wiederholrate an andere, an der C2X-Kommunikation im ISM-Funkband teilnehmende Sender übertragen werden, die dann auch mit verminderter Wiederholrate aussenden.

In Fortführung dieses Gedankens kann die Wiederholrate nur für nicht sicherheitskritische Funktionen reduziert werden, so dass eine Priorisierung der sicherheitskritischen Funktionen in der Funkkommunikation auf dem ISM-Funkband erreicht wird. Es ist auch möglich, die Wiederholrate für sicherheitskritische Funktionen weniger stark zu reduzieren als für nicht-sicherheitskritische Funktionen.

Schließlich kann die vorgesehene Warnmitteilung erfindungsgemäß an eine Mensch-Maschine-Schnittstelle zur Anzeige ausgegeben werden. Dies kann auf einem Zentraldisplay für Warnoder Fehlermeldungen in einem Fahrzeug erfolgen. Alternativ oder zusätzlich kann auch eine Leuchte in dem Armaturenbrett vorgesehen sein, die bei Erreichen der verschiedenen Warnschwellen gegebenenfalls unterschiedliche Farben anzeigt. Bei einer Fernüberwachung kann die Warnmitteilung auch in einer Zentrale angezeigt werden, beispielsweise einer Verkehrsleitstelle. Dies lässt eine Anwendung des erfindungsgemäßen Verfahrens auch in Anwendungen die, die nicht in einem Kraftfahrzeug, sondern beispielsweise in fest installierten Teilnehmern an der Fahrzeug-zu-Umgebung-Kommunikation stattfindet.

Schließlich betrifft die Erfindung eine Kommunikationseinheit, vorzugsweise in einem Kraftfahrzeug, zur Teilnahme an der Fahrzeug-zu-Umgebung-Kommunikation in einem ISM-Funkband mit einer Sende- und Empfangseinheit, welche zur Aussendung und zum Empfangen von Kommunikationsbotschaften auf einem ISM-Funkband eingerichtet ist, und mit einer Schnittstelle zu einer Mensch-Maschine-Schnittstelle zum Anzeigen von Status-und/oder Warnmitteilungen. Die Sende- und Empfangseinheit der Kommunikationseinheit ist erfindungsgemäß zur Durchführung des vorbeschriebenen Verfahrens oder von Teilen hiervon eingerichtet. Damit ist es möglich, dass die Kommunikationseinheit die Auslastung auf den ISM-Funkkanal überwacht und bei einer Überlastung Fehler anzeigt oder Mitteilungen ausgibt.

Sowohl im Rahmen des erfindungsgemäßen Verfahrens als auch bei der Kommunikationseinheit kann die Schnittstelle zu der Mensch-Maschine-Einheit erfindungsgemäß auch verwendet werden, um interne Fehler der Kommunikationseinheit, beispielsweise eine nicht mehr funktionierende Kommunikationseinheit oder eine defekte Antenne, anzuzeigen. Bei einem solchen Defekt muss der Fahrer eine Werkstatt aufsuchen.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

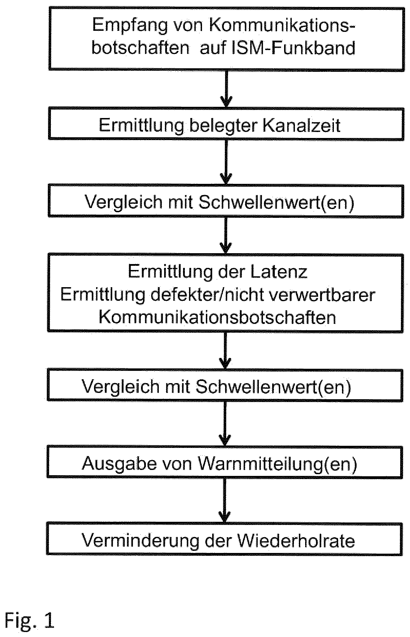

Die einzige Fig. 1 zeigt schematisch ein Flussdiagramm zum Ablauf des erfindungsgemäßen Verfahrens.

Das Verfahren zur Anzeige der Funktionsfähigkeit beziehungsweise Zuverlässigkeit der Fahrzeug-zu-Umgebung-Kommunikation in ISM-Funkbändern ist erfindungsgemäß in einer nicht dargestellten Kommunikationseinheit eingerichtet, welche an der Fahrzeug-zu-Umgebung-Kommunikation teilnimmt. Diese kann insbesondere in einem Kraftfahrzeug, aber auch anderen an der Fahrzeug-zu-Umgebung-Kommunikation teilnehmenden Funktionseinheiten oder Funktionsmodulen installiert sein, insbesondere wenn diese durch Personen überwacht oder zumindest regelmäßig kontrolliert werden.

Die Kommunikationseinheiten weisen eine Sende- und Empfangseinheit auf, welche mit einem entsprechenden Sender und Empfänger zur Aussendung und zum Empfang von Kommunikationsbotschaften auf dem ISM-Funkband eingerichtet ist. Dazu ist in der Sende- und Empfangseinheit ein geeigneter Mikroprozessor zur Abarbeitung des Kommunikationsprotokolls und zur Ansteuerung der in der Sende- und Empfangseinheit enthaltenen Hardware vorgesehen. Ferner weist die Kommunikationseinheit eine Schnittstelle zu einer Mensch-Maschine-Schnittstelle (HMI) auf, über die Status- und/oder Warnmitteilungen aus der Fahrzeug-zu-Umgebung-Kommunikation (C2X-Kommunikation) übertragen werden können.

In der Recheneinheit der Kommunikationseinheit ist zur Überprüfung der Funktionsfähigkeit des Funkkanals ein Verfahren implementiert, bei welchem von dem Empfänger die Kommunikationsbotschaften auf dem ISM-Funkband empfangen werden. Hierbei ist der Empfänger insbesondere dazu eingerichtet, sämtliche der empfangbaren Kommunikationsbotschaften auf dem ISM-Funkkanal zu empfangen. Im Rahmen des Verfahrens wird unabhängig davon, ob die Kommunikationsbotschaft zu der Fahrzeug-zuUmgebung-Kommunikation gehört und an den Empfänger dieser Kommunikationseinheit gerichtet ist, jede Kommunikationsbotschaft dahingehend ausgewertet, dass die durch die Kommunikationsbotschaften belegte Kanalzeit auf dem ISM-Funkband ermittelt wird.

Diese belegte Kanalzeit wird mit der maximal für Kommunikationsbotschaften auf dem ISM-Funkband zur Verfügung stehenden Kanalzeit, die im Rahmen des Kommunikationsprotokolls für die Nutzung der lizenzfreien ISM-Funkbänder vorgegeben ist, verglichen und hieraus ein prozentualer Anteil ermittelt.

Diese ermittelte Kanalzeit wird mit Schwellenwerten verglichen, wobei im Falle eines Überschreitens des Schwellenwertes eine Warnmitteilung über die Mensch-Maschine-Schnittstelle ausgegeben wird.

Diese Warnmitteilung kann beispielsweise eine Text- und/oder Symbolanzeige auf einem zentralen Display des Fahrzeugs oder der sonstigen an der Fahrzeug-zu-Umgebung-Kommunikation teilnehmenden Funktionseinheit sein. Die Warnmitteilung kann auch durch eine Leuchte, beispielsweise in dem Armaturenbrett des Kraftfahrzeugs, gegeben sein, wobei die Leuchte bei Existenz unterschiedlicher Schwellenwerte farblich unterschiedlich aufleuchten kann.

Nach der Ermittlung der belegten Kanalzeit im Vergleich zu der maximal zur Verfügung stehenden Kanalzeit der ISM-Funkkommunikation findet ferner eine Ermittlung der Latenz, das heißt, der Signalverzögerung in der Funkkommunikation, sowie eine Ermittlung defekter beziehungsweise nicht verwertbarer Kommunikationsbotschaften auf dem ISM-Funkband statt. Bei einer starken Auslastung des Funkbandes steigt die Latenz deutlich an. Im Falle einer Überlastung und vieler Kollisionen von Funkbotschaften ergeben sich ferner defekte und nicht verwertbare Kommunikationsbotschaften, die durch den Empfänger aufgrund von Störungen nicht dekodiert werden können.

Auch die ermittelte Latenz (Signallaufzeit) und die Anzahl der nicht verwertbaren beziehungsweise defekten Kommunikationsbotschaften werden mit Schwellenwerten verglichen, wobei in geeigneter Weise ebenso Warnmitteilungen ausgegeben werden können.

Um im Falle eines Übersteigens von Schwellenwerten die Kanalauslastung nicht noch weiter zu erhöhen, kann gleichzeitig die Wiederholrate der Datenaussendungen eines dem Empfänger zugeordneten Senders reduziert werden. So könnte zum Beispiel an Stelle von einer Datenwiederholrate von 1 Hz nur noch mit einer Datenwiederholrate von 0,5 Hz oder sogar 0,33 Hz gesendet werden. Die Reduktion der Datenwiederholrate kann auf Funktionen reduziert werden, die nicht sicherheitskritisch sind. Alternativ könnte die Wiederholrate von nicht sicherheitskritischen Funktionen auch noch weiter, beispielsweise auf 0,2 Hz, reduziert werden.

Durch die Darstellung der aktuellen Kanalsituation beziehungsweise -auslastung beziehungsweise der Paketfehler und der Latenz kann der Fahrer eines Fahrzeugs abschätzen, ob die C2X-Kommunikation über das ISM-Funkband (RKE-Kommunikation) mit ausreichender Genauigkeit funktioniert.

Im Gegensatz zu einer C2X-Kommunikation über automotive-WLAN nach dem IEEE 802.11p-Standard ist die Kanalauslastung bei der Kommunikation über dem ISM-Kanal nicht überwacht, da dort die verwendeten Kanäle nicht nur für die Fahrzeug-zu-Umgebung -Kommunikation reserviert sind, sondern für eine Vielzahl von Anwendungen verwendet werden können, die gerade im urbanen Bereich zu einer hohen Auslastung dieses Funkkanals führen kann.

Außerdem findet keine Congestion Control (Überlastkontrolle mit Stausteuerung) für die Kanäle in dem ISM-Funkkanal statt, bei der bei einem Datenstau wichtige Kommunikationsbotschaften bevorzugt behandelt und so immer zuverlässig versendet werden können.

Bei C2X-Kommunikation über automotive-WLAN nach IEEE 802.11p-Standard bietet es sich analog zur beschriebenen Erfindung an, den aktuellen Zustand des Congestion Control ebenfalls über die Darstellung im HMI anzuzeigen. So kann zum Beispiel eine Warnung erfolgen, wenn die Kanalauslastung sehr hoch ist und daher die Latenz entsprechend ansteigt.

Durch die Erfindung erhält der Nutzer der Fahrzeug-zu-Umgebung-Kommunikation aber einen Hinweis, wie zuverlässig die Fahrzeug-zu-Umgebung-Kommunikation gerade funktioniert.

## Patentansprüche

1. Verfahren zur Steuerung einer Wiederholrate einer Datenaussendung in Abhängigkeit von der Feststellung von Kommunikationsproblemen bei der Fahrzeug-zu-Umgebung-Kommunikation in einem ISM-Funkband, wobei eine Kanalauslastung des verwendeten ISM-Funkbandes durch einen Vergleich einer durch Kommunikationsbotschaften belegten Kanalzeit zu der maximal für Kommunikationsbotschaften zur Verfügung stehenden Kanalzeit ermittelt wird, wobei bei Überschreiten eines ersten Schwellenwertes der belegten Kanalzeit eine erste Warnmitteilung ausgegeben wird, **dadurch gekennzeichnet, dass** bei Überschreiten des ersten Schwellenwertes die Wiederholrate der Datenaussendung auf eine erste Wiederholrate reduziert wird, und dass eine zweite Warnmitteilung bei Überschreiten eines zweiten Schwellenwertes der belegten Kanalzeit ausgegeben wird und die Wiederholrate der Datenaussendung auf eine zweite Wiederholrate reduziert wird, die niedriger ist als die erste Wiederholrate, wobei der erste Schwellenwert niedriger ist als der zweite Schwellenwert, und wobei die Wiederholrate nur für nicht sicherheitskritische Funktionen reduziert wird.

2. Verfahren nach Anspruch 1, **dadurch gekennzeichnet, dass** die Anzahl der defekten und/oder nicht verwertbaren Kommunikationsbotschaften der Fahrzeug-zu-Umgebung-Kommunikation in dem ISM-Funkband über einen vorgegebenen Zeitraum ermittelt wird und bei Überschreiten eines Schwellenwertes eine Warnmitteilung ausgegeben wird.

3. Verfahren nach einem der vorhergehenden Ansprüche, **dadurch gekennzeichnet, dass** die Latenz für die Übertragung einer Kommunikationsbotschaft der Fahrzeug-zu-Umgebung-Kommunikation in dem ISM-Funkband ermittelt wird und bei Überschreiten eines Schwellenwertes eine Warnmitteilung ausgebegeben wird.

4. Verfahren nach einem der vorhergehenden Ansprüche, **dadurch gekennzeichnet, dass** eine Warnmitteilung an eine Mensch-Maschine-Schnittstelle zur Anzeige ausgegeben wird.

5. Kommunikationseinheit zur Teilnahme an der Fahrzeug-zu-Umgebung-Kommunikation in einem ISM-Funkband mit einer Sende- und Empfangseinheit, welche zur Aussendung und zum Empfang von Kommunikationsbotschaften auf einem ISM-Funkband eingerichtet ist, und mit einer Schnittstelle zu einer Mensch-Maschine-Schnittstelle, **dadurch gekennzeichnet, dass** die Sende- und Empfangseinheit zur Durchführung des Verfahrens nach einem der Ansprüche 1 bis 4 eingerichtet ist.

## Claims

1. Method for controlling a repetition rate of a data transmission on the basis of the detection of communications problems in vehicle-to-environment communication in an ISM radio band, channel usage of the ISM radio band used being determined by comparing a channel time occupied by communication messages with the maximum channel time available for communication messages, a first warning notification being output if a first threshold value for the occupied channel time is exceeded, **characterized in that** the repetition rate of the data transmission is reduced to a first repetition rate if the first threshold value is exceeded, and **in that** a second warning notification is output if a second threshold value for the occupied channel time is exceeded and the repetition rate of the data transmission is reduced to a second repetition rate which is lower than the first repetition rate, the first threshold value being lower than the second threshold value, and the repetition rate being reduced only for non-safety-critical functions.

2. Method according to Claim 1, **characterized in that** the number of defective and/or unusable communication messages in vehicle-to-environment communication in the ISM radio band is determined over a predefined period of time and a warning message is output if a threshold value is exceeded.

3. Method according to one of the preceding claims, **characterized in that** the latency for transmitting a communication message in vehicle-to-environment communication in the ISM radio band is determined and a warning message is output if a threshold value is exceeded.

4. Method according to one of the preceding claims, **characterized in that** a warning message is output to a human-machine interface for indication.

5. Communications unit for participating in vehicle-to-environment communication in an ISM radio band, having a transmitting and receiving unit which is set up to transmit and receive communication messages in an ISM radio band, and having an interface to a human-machine interface, **characterized in that** the transmitting and receiving unit is set up to carry out the method according to one of Claims 1 to 4.

## Revendications

1. Procédé de commande d'un taux de répétition d'une émission de données en fonction de la constatation de problèmes de communication lors de la communication de véhicule vers l'environnement dans une bande radioélectrique ISM, une charge de canal de la bande radioélectrique ISM utilisée étant déterminée par une comparaison d'un temps de canal occupé par des messages de communication avec le temps de canal maximum disponible pour les messages de communication, un premier communiqué d'alerte étant délivré en cas de dépassement d'une première valeur de seuil du temps de canal occupé, **caractérisé en ce qu'**en cas de dépassement de la première valeur de seuil, le taux de répétition de l'émission de données est réduit à un premier taux de répétition, et **en ce qu'**un deuxième communiqué d'alerte est délivré en cas de dépassement d'une deuxième valeur de seuil du temps de canal occupé et le taux de répétition de l'émission de données est réduit à un deuxième taux de répétition qui est inférieur au premier taux de répétition, la première valeur de seuil étant inférieure à la deuxième valeur de seuil et le taux de répétition n'étant réduit que pour des fonctions non essentielles pour la sécurité.

2. Procédé selon la revendication 1, **caractérisé en ce que** le nombre de messages de communication défectueux et/ou non utilisables de la communication de véhicule vers l'environnement dans la bande radioélectrique ISM sur une période donnée est déterminé et un communiqué d'alerte est délivré en cas de dépassement d'une valeur de seuil.

3. Procédé selon l'une des revendications précédentes, **caractérisé en ce que** la latence pour la transmission d'un message de communication de la communication de véhicule vers l'environnement dans la bande radioélectrique ISM est déterminée et un communiqué d'alerte est délivré en cas de dépassement d'une valeur de seuil.

4. Procédé selon l'une des revendications précédentes, **caractérisé en ce qu'**un communiqué d'alerte est délivré pour affichage sur une interface homme-machine.

5. Unité de communication destinée à participer à la communication de véhicule vers l'environnement dans une bande radioélectrique ISM avec une unité d'émission et de réception, laquelle est conçue pour émettre et pour recevoir des messages de communication sur une bande radioélectrique ISM, et comprenant une interface vers une interface homme-machine, **caractérisée en ce que** l'unité d'émission et de réception est conçue pour mettre en oeuvre le procédé selon l'une des revendications 1 à 4.
